# EUROPÄISCHE PATENTSCHRIFT

(11) **EP 1 994 313 B1**
(45) Veröffentlichungstag und Bekanntmachung des Hinweises auf die Patenterteilung: **17.11.2010**
(21) Anmeldenummer: 07704704.1
(22) Anmeldetag: 23.02.2007
(51) Int. Cl.: F16H 63/32

(54) **SCHALTVORRICHTUNG**
SHIFT DEVICE
DISPOSITIF DE COMMUTATION

(30) Priorität: 01.03.2006 DE 102006009352
(43) Veröffentlichungstag der Anmeldung: 26.11.2008
(73) Patentinhaber: Schaeffler Technologies GmbH & Co. KG, 91074 Herzogenaurach (DE)
(72) Erfinder: MEHLIS, Thomas, 91077 Kleinsendelbach (DE); KRÄMER, Klaus, 91460 Baudenbach (DE); LÖFFELMANN, Jochen, 96158 Frensdorf (DE)
(86) Internationale Anmeldenummer: PCT/EP2007/051774
(87) Internationale Veröffentlichungsnummer: WO 2007/099067

(56) Entgegenhaltungen:
- DE-C1- 19 954 545

## Beschreibung

### Gebiet der Erfindung

Die Erfindung betrifft eine Schaltvorrichtung mit wenigstens zwei zumindest abschnittsweise zueinander benachbarten Schaltschienen, wobei die Schaltschienen in parallele Längsrichtungen relativ zueinander und dabei unabhängig voneinander verschiebbar getriebeseitig gelagert sind.

### Hintergrund der Erfindung

Schaltschienen sind alle zumeist längs ihrer Hauptachse verschiebbare Schaltelemente, an denen Betätigungselemente, wie Schaltgabeln und Hebel angeordnet sind und die Betätigungskräfte, Momente und Bewegungen zum Schalten, Wählen, Steuern und Sperren von Mechanismen und Getriebebaugruppen übertragen. Diese Schaltelemente sind zumeist in zwei Lagerstellen zumindest längsverschiebbar im Fahrzeuggetriebe gelagert. Schaltschienen in modernen Fahrzeuggetrieben sind oft Stanzteile aus Blech und weisen in eine Richtung der Stärke des Ausgangsmaterials entsprechende schmale Abmessungen auf. Mehrere dieser Schaltschienen sind deshalb kostengünstig und Bauraum sparend nebeneinander liegend paketierbar.

Eine gattungsbildende Schaltvorrichtung ist in DE 199 54 545 C1 beschrieben. Diese Schaltvorrichtung zeigt zwei Paare von jeweils vier nebeneinander angeordneten und parallel zueinander ausgerichteten sowie richtungsgleich nebeneinander verlaufenden Schaltschienen. An jeder der Schaltschiene ist mindestens ein bewegbares Schaltelement z.B. in Form einer Schaltgabel fest. Die Schaltschienen sind in parallele Längsrichtungen zueinander und unabhängig voneinander um vorgegebene begrenzte Strecken verschiebbar. Wenn eine der Schaltschienen verschoben wird, sind die anderen Schaltschienen in der Regel gegen Verschieben gesperrt. Mit der bewegten Schaltschiene werden von dem Schaltelement zur jeweiligen Schaltschiene und von der Schaltschiene zu dem Schaltelement Reaktionskräfte aus Betätigungskräften übertragen, durch die zum Beispiel Gänge geschaltet werden.

Die Abmessungen der Schaltschienen sind hinsichtlich der Widerstandmomente ihrer Querschnitte dem Normalbetrieb angepasst. Bei Überlast, z.B. bei Missbrauch durch gewaltsam durchgeführte Schaltbewegungen, besteht jedoch die Gefahr, dass sich die Schaltschienen verbiegen oder ausknicken, insbesondere dann, wenn wie in dem Beispiel nach DE 199 54 545 C1 der Abstand zwischen den Lagerstellen für die Schaltschienen im Verhältnis zum Querschnitt der Schaltschiene relativ groß ist.

### Zusammenfassung der Erfindung

Die Aufgabe der Erfindung ist es daher eine Wälzlagerung zu schaffen, mit der der zuvor genannte Nachteil vermieden wird.

Die Aufgabe ist mit dem Gegenstand des Anspruches 1, dadurch gelöst, dass wenigstens eine als erste Schaltschiene bezeichnete der Schaltschienen mit einem an der ersten Schaltschiene befestigten Rollenlager versehen ist. Die zweite zu der ersten unmittelbar benachbarte der Schaltschienen und die erste Schaltschiene sind mittels des Rollenlagers wenigstens zeitweise aneinander rollengelagert. Das/Die Rollenlager ist/sind unabhängig von weiteren Lagerungen ausgebildet, mit denen die Schaltschienen beispielsweise in einem Gehäuse des Getriebes längs verschiebbar gelagert sind.

Unter "zumindest zeitweise" ist zu verstehen, dass die Schaltschienen zum Beispiel bei normalen Belastungen oder in lastfreien Betriebszuständen sich nicht über die Rollenlagerung(en) aneinander abstützen. In dem Fall verformen oder verlagern sich eine der Schaltschienen oder beide der Schaltschienen nur in Betriebszuständen, in denen die Schaltschienen bestrebt sind sich aneinander abzustützen. Dies ist beispielsweise bei hohen Betätigungskräften möglich. Eine der zueinander benachbarten oder beide der Schaltschienen verformt/verformen bzw. verlagern sich soweit in Richtung der anderen benachbarten Schaltschiene, also aufeinander zu, bis die Schaltschienen an der Rollenlagerung aufeinander treffen und sich schließlich an der Rollenlagerung aneinander abstützen.

Die Rollenlagerung ist vorteilhaft in Bereichen der Schaltvorrichtung angeordnet, in denen die größten Verformungen, Belastungen oder Verlagerungen auftreten.

Unter "zumindest zeitweise" ist alternativ auch zu verstehen, dass das/die Rollenlager in allen Betriebszuständen im Kontakt mit der Rollenlagerung sind, so dass Verlagerungen und Verformungen an der Lagerstelle von vorneherein verhindert werden. Für die Schaltschienen sind so in allen Betriebsbedingurigen exakte Betriebspositionen abgesichert. Derartig exakte Positionen sind insbesondere in Nähe des Eingriffs von Schaltfingern in Schaltmäuler als Betätigungsglieder oder in der Nähe von Schaltgabeln als Betätigungsglieder von Bedeutung: Die exakte Positionen der Glieder am Eingriff bzw. an der Koppelstelle ist Voraussetzung für exakte Schalt- bzw. Wählvorgänge und/oder für guten Schaltkomfort.

Die Anordnung von einzelnen bzw. mehreren der Rollenlagerungen an einer der Schaltschienen, an jeder der Schaltschienen oder wahlweise an einzelnen Schaltschienen der Vorrichtung ist je nach Anwendung in allen denkbaren Kombinationen vorgesehen.

Die mittels Rollenlagerung aneinander abgestützten Schaltschienen sind trotz hoher Stützkräfte aufgrund der Rollenlagerung nahezu reibungsarm und damit mit geringem Widerstand relativ zueinander in die parallelen Längsrichtungen verschiebbar. Die Rollenlagerung ist einfach und kostengünstig herzustellen und nimmt wenig Bauraum in Anspruch, insbesondere dann, wenn die Rollenlagerung in eine Ausnehmung der jeweiligen Schaltschiene integriert ist.

Das Rollenlager ist vorteilhaft Platz sparend in die jeweilige Schaltschiene integriert. Eine oder mehreren Rollen der Rollenlagerungen ragen beidseitig oder nur zu einer Seite seitlich der Schaltschiene über die Kanten einer Ausnehmung aus der ersten Schaltschiene in Richtung der zweiten Schaltschiene hervor. Die Ausnehmung ist vorzugsweise ausgestanzt.

Eine weitere Ausgestaltung der Erfindung sieht vor, dass das Rollenlager einen Bolzen aufweist. Der Bolzen ist entweder einteilig mit der Rolle oder als Rolle ausgebildet oder der Bolzen ist eine Achse, auf der eine oder mehrere Rollen drehbar gelagert sind. Der Bolzen ist in Längs- und in Querrichtung an der Schaltschiene fest und rotiert in der Ausnehmung um die eigene Längsmittelachse oder ist alternativ in der Ausnehmung rotationsfest gehalten.

Die Aufnahme und Halterung des Bolzens ist kostengünstig herzustellen, wenn zunächst die Ausnehmung gestanzt wird, anschließend die Rolle(n) auf den Bolzen montiert, dann der Bolzen in die Ausnehmung eingesetzt und schließlich endseitig des Bolzens Material an den Körperkanten der Ausnehmung, zum Beispiel durch Prägen, so verdrängt wird, dass der Bolzen in der Ausnehmung gehalten ist.

### Kurze Beschreibung der Zeichnungen

Die Erfindung wird nachfolgend anhand von Ausführungsbeispielen näher erläutert. Es zeigen:
- Figur 1: eine Schaltvorrichtung aus einem Paket Schaltschienen mit Schaltgabeln und Lagerungen für das Paket in einer Gesamtan- sicht,
- Figur 2: eine längs der Linie II-II geschnittene Teilansicht der Vorrichtung nach Figur 1,
- Figur 3: ein weiteres Paket Schaltschienen einer Schaltvorrichtung mit Rollenlagern,
- Figur 4: eine längs der Linie IV-IV geschnittene Darstellung einer Rollenla- gerung des Schaltschienenpaketes aus Figur 3 und
- Figur 5: die Befestigung einer Rollenlagerung in einer Schaltschiene.

### Detaillierte Beschreibung der Zeichnung

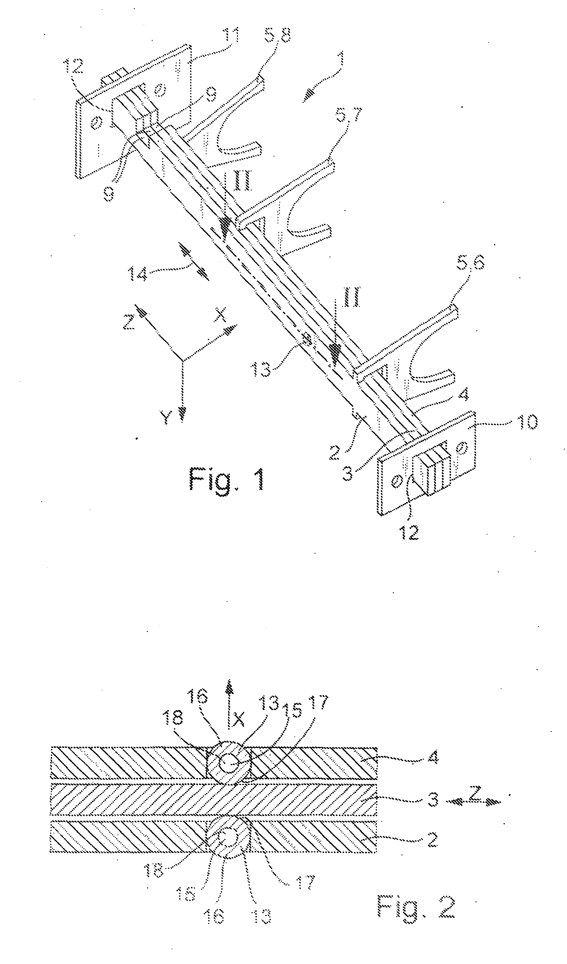

Figur 1 zeigt eine Schaltvorrichtung 1 mit einem Paket Schaltschienen 2, 3 und 4. Jede der Schaltschienen 2, 3, 4 weist als Betätigungsglied 5 ein Schaltmaul 9 und eine der Schaltgabeln 6, 7oder 8 auf. Das Paket Schaltschienen 2, 3, 4 ist in den Lagerschilden 10 und 11 mittels nicht näher beschriebener Lagerungen 12 die mit dem Doppelpfeil 14 gekennzeichneten parallelen Z-Längsrichtungen längs verschiebbar gleit- bzw. wälzgelagert.

Die Schaltschienen 2 und 4 sind außerdem jeweils mit mindestens einer Rollenlagerung 13 versehen. Die Rollenlagerungen 13 sind in Figur 2 geschnitten dargestellt und jeweils aus einem Bolzen 15 und einer Rolle 16 gebildet. Der Bolzen 15 ist in einer Aufnahme 17 der jeweiligen Schaltschiene 2 oder 4 fest gehalten und ist Achse für die auf dem Bolzen 15 drehbar gelagerte Rolle 16. Die Rolle 16 ist auf dem Bolzen 15 um die Längsmittelachse 18 rotierbar gleit- oder wälzgelagert. Es ist auch denkbar, statt einer Rolle mehrere Rollen auf dem Bolzen zu lagern oder mehrere der Bolzen mit einer bzw. mehreren Rollen als Rollenlagerung einzusetzen.

Die Schaltschienen 2, 3 und 4 sind dauerhaft über die Rollenlagerungen 13 aneinander abgestützt und deshalb insbesondere in X-Richtung in der Lage stabil gehalten. Es ist auch denkbar, dass zwischen der jeweiligen Rolle 16 und der Schaltschiene 3 ein Spiel ausgebildet ist, um das sich die Schaltschienen bei beispielsweise normalen Betriebskräften aufeinander zu bewegen können, ohne im Kontakt mit der Rollenlagerung 13 zu sein. In diesem Fall behindert die Rollenlagerung 13 das unmittelbare Aneinanderliegen der Schaltschienen 2, 3 und 4 bei Belastungsspitzen. Gleichzeitig verhindert das Rollenlager 13 durch Wälzkontakt, dass bei Längsverschiebung einer der Schaltschienen in die Z-Richtungen Reibkontakt zwischen dem jeweiligen Schaltschienenpaar 2 und 3 oder 3 und 4 entsteht.

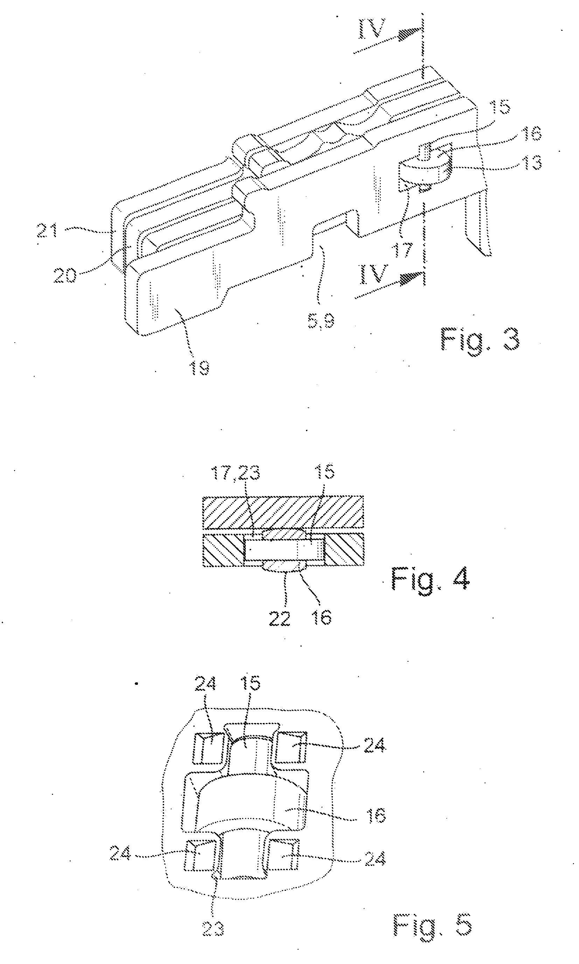

Figur 3 zeigt die Rollenlagerung 13 in einem Paket aus den Schaltschienen 19, 20 und 21. In diesem Paket weisen zweckmäßig die Schaltschiene 19 und 21 eine derartige Rollenlagerung auf, wobei nur die Rollenlagerung 13 in der Schaltschiene 19 sichtbar ist. Die Rollenlagerung 13 ist nahe der Betätigungsglieder 5 in Form von Schaltmäulern 9 angeordnet. Es sichert die genaue Lage des jeweiligen Schaltmauls 9 zu beispielsweise einem nicht dargestellten Schaltfinger auch bei hohen Betätigungskräften ab.

Figur 4 zeigt die Rollenlagerung 13 in einem Längsschnitt. Die auf dem Bolzen 15 gelagerte Rolle 16 weist eine ballige Mantelfläche 22 auf. Die Aufnahme 17 ist eine Ausnehmung 23 in der betreffenden Schaltschiene 2, 3 oder 4. Figur 5 zeigt, dass von den Rändern der Ausnehmung 23 endseitig des Bolzens 15 durch Prägen so Material aus der mit der Ausnehmung 23 versehenen Schaltschiene 2, 3, 4 in die Ausnehmung 23 verdrängt ist, dass Prägungen 24 entstehen. Mit den Prägungen 24 ist der Bolzen 15 fest oder drehbar in der Aufnahme 17 gehalten.

### Bezugszeichen

- 1: Schaltvorrichtung
- 2: Schaltschiene
- 3: Schaltschiene
- 4: Schaltschiene
- 5: Betätigungselement
- 6: Schaltgabel
- 7: Schaltgabel
- 8: Schaltgabel
- 9: Verbindungsarm
- 10: Verbindungsarm
- 11: Überlastsicherung
- 12: Stützelement
- 13: Bolzen
- 14: Verdickung
- 15: Schlitz
- 16: Schlitz
- 17: Gleitelement
- 18: Gleitscheibe
- 19: Loch
- 20: zylindrischer Abschnitt des Bolzens 13
- 21: Rand des Bolzens 20
- 22: weiterer zylindrischer Abschnitt des Bolzens
- 23: Bund
- 24: Prägung

## Patentansprüche

1. Schaltvorrichtung (1) mit wenigstens zwei zumindest abschnittsweise zueinander benachbarten Schaltschienen (2, 3, 4, 19, 20, 21), wobei die Schaltschienen (2, 3, 4, 19, 20, 21) in parallele Längsrichtungen relativ zueinander und dabei unabhängig voneinander verschiebbar getriebeseitig gelagert sind, **dadurch gekennzeichnet, dass** wenigstens eine erste Schaltschiene (2, 4, 19, 21) der Schaltschienen (2, 3, 4, 19, 20, 21) mit einem an der ersten Schaltschiene (2, 4, 19, 21) befestigten Rollenlager (13) aus wenigstens einer Rolle (16) versehen ist und dass eine zu der ersten Schaltschiene (2, 4, 19, 21) benachbarte zweite Schaltschiene (3, 20) der Schaltschienen (2, 3, 4, 19, 20, 21) und die erste Schaltschiene (2, 4, 19, 21) mittels des Rollenlagers (13) wenigstens zeitweise aneinander rollengelagert sind.

2. Schaltvorrichtung nach Anspruch 1, **dadurch gekennzeichnet, dass** das Rollenlager (13) in die erste Schaltschiene (2, 4, 19, 21) integriert ist, wobei zumindest eine drehbar in der ersten Schaltschiene (2, 4, 19, 21) gelagerte Rolle (16) seitlich aus der ersten Schaltschiene (2, 4, 19, 21) in Richtung der zweiten Schaltschiene (3, 20) hervorsteht.

3. Schaltvorrichtung nach Anspruch 1, **dadurch gekennzeichnet, dass** das Rollenlager (13) zumindest einen Bolzen (15) aufweist, um dessen Längsmittelachse (18) wenigstens eine Rolle (16) drehbar gelagert ist, wobei die Längsmittelachse (18) zu den parallelen Längsrichtungen ausgerichtet ist und wobei die zweite Schaltschiene (3, 20) zumindest zeitweise wenigstens auf der Rolle (16) in die einander entgegengesetzte Längsrichtungen beweglich gelagert ist.

4. Schaltvorrichtung nach Anspruch 3, **dadurch gekennzeichnet, dass** die Rolle (16) auf drehbar auf dem zur Schaltschiene (2, 4, 19, 21) festen Bolzen (15) gelagert ist.

5. Schaltvorrichtung nach Anspruch 3, **dadurch gekennzeichnet, dass** der Bolzen (15) zumindest mit einem Ende in eine Ausnehmung (23) der ersten Schaltschiene (2, 4, 19, 21) eingreift und seitlich mittels spanlos in die Ausnehmung (23) verdrängten Materials der ersten Schaltschiene (2, 4, 19, 21) in der Ausnehmung (23) gehalten ist.

## Claims

1. Shift device (1) with at least two shift rails (2, 3, 4, 19, 20, 21) which are adjacent to one another at least in sections, wherein the shift rails (2, 3, 4, 19, 20, 21) are mounted on the gearing side so as to be displaceable relative to one another and independently of one another in parallel longitudinal directions, **characterized in that** at least one first shift rail (2, 4, 19, 21) of the shift rails (2, 3, 4, 19, 20, 21) is provided with a roller bearing (13), which is fastened to the first shift rail (2, 4, 19, 21) and consists of at least one roller (16), and **in that** a second shift rail (3, 20) of the shift rails (2, 3, 4, 19, 20, 21), said second shift rail being adjacent to the first shift rail (2, 4, 19, 21), and the first shift rail (2, 4, 19, 21) are roller-mounted at least temporarily on each other by means of the roller bearing (13).

2. Shift device according to Claim 1, **characterized in that** the roller bearing (13) is integrated into the first shift rail (2, 4, 19, 21), with at least one roller (16) which is mounted rotatably in the first shift rail (2, 4, 19, 21) protruding laterally out of the first shift rail (2, 4, 19, 21) in the direction of the second shift rail (3, 30).

3. Shift device according to Claim 1, **characterized in that** the roller bearing (13) has at least one bolt (15), about the longitudinal centre axis (18) of which at least one roller (16) is rotatably mounted, the longitudinal centre axis (18) being aligned with respect to the parallel longitudinal directions, and the second shift rail (3, 20) being at least temporarily mounted at least on the roller (16) so as to be movable in the mutually opposite longitudinal directions.

4. Shift device according to Claim 3, **characterized in that** the roller (16) is mounted rotatably on the bolt (15) which is fixed with respect to the shift rail (2, 4, 19, 21).

5. Shift device according to Claim 3, **characterized in that** the bolt (15) engages at least at one end in a recess (23) of the first shift rail (2, 4, 19, 21) and is held laterally in the recess (23) by means of material of the first shift rail (2, 4, 19, 21), which material is pushed into the recess (23) without cutting.

## Revendications

1. Dispositif de commutation (1) comprenant au moins deux rails de commutation (2, 3, 4, 19, 20, 21) adjacents l'un à l'autre au moins en partie, les rails de commutation (2, 3, 4, 19, 20, 21) étant montés l'un par rapport à l'autre dans des directions longitudinales parallèles et dans ce cas de manière déplaçable indépendamment l'un de l'autre du côté de la transmission, **caractérisé en ce qu'**au moins un premier rail de commutation (2, 4, 19, 21) des rails de commutation (2, 3, 4, 19, 20, 21) est pourvu d'un palier à rouleaux (13) fixé sur le premier rail de commutation (2, 4, 19, 21), constitué d'au moins un rouleau (16) et **en ce qu'**un deuxième rail de commutation (3, 20) adjacent au premier rail de commutation (2, 4, 19, 21) des rails de commutation (2, 3, 4, 19, 20, 21) et le premier rail de commutation (2, 4, 19, 21) sont supportés sur palier l'un contre l'autre au moins temporairement au moyen du palier à rouleaux (13).

2. Dispositif de commutation selon la revendication 1, **caractérisé en ce que** le palier à rouleaux (13) est intégré dans le premier rail de commutation (2, 4, 19, 21), au moins un rouleau (16) monté à rotation dans le premier rail de commutation (2, 4, 19, 21) dépassant latéralement du premier rail de commutation (2, 4, 19, 21) dans la direction du deuxième rail de commutation (3, 20).

3. Dispositif de commutation selon la revendication 1, **caractérisé en ce que** le palier à rouleaux (13) présente au moins un boulon (15), autour de l'axe médian longitudinal (18) duquel est monté à rotation au moins un rouleau (16), l'axe médian longitudinal (18) étant orienté vers les directions longitudinales parallèles et le deuxième rail de commutation (3, 20) étant monté mobile au moins temporairement au moins sur le rouleau (16) dans les directions longitudinales opposées.

4. Dispositif de commutation selon la revendication 3, **caractérisé en ce que** le rouleau (16) est monté à rotation sur le boulon (15) fixé au rail de commutation (2, 4, 19, 21).

5. Dispositif de commutation selon la revendication 3, **caractérisé en ce que** le boulon (15) vient en prise au moins par une extrémité dans un évidement (23) du premier rail de commutation (2, 4, 19, 21) et est maintenu dans l'évidement (23) latéralement au moyen de matériau du premier rail de commutation (2, 4, 19, 21) enfoncé sans enlèvement de copeaux dans l'évidement (23).
